# EUROPEAN PATENT SPECIFICATION

(11) **EP 1 229 371 B1**
(45) Date of publication and mention of the grant of the patent: **15.09.2004**
(21) Application number: 02075514.6
(22) Date of filing: 05.02.2002
(51) Int. Cl.: G02B 7/02, G02B 7/18, B24B 13/005

(54) **Optical glass fastening device**
Haltevorrichtung für optisches Glas
Dispositif de fixation pour verre optique

(30) Priority: 06.02.2001 ES 200100258
(43) Date of publication of application: 07.08.2002
(73) Proprietor: Monocrom, 08800 Vilanova I La Geltru, Barcelona (ES)
(72) Inventor: Galan Valiente, Miguel, 08800 Vilanova I La Geltru, Barcelona (ES)
(74) Representative: Richebourg, Michel François

(56) References cited:
- DE-C- 3 924 277
- US-A- 5 291 092

## Description

### OBJECT OF THE INVENTION

This invention refers as its title suggests to a device for fastening optical glass, which is comprised of an outer ring, equipped with a truncated cone-shaped inner surface, and of at least two wedges designed to be housed to a greater or lesser extent on the inside of the ring, exercising pressure on the glass to be immobilised.

### BACKGROUND OF THE INVENTION.

The optical glass designed to be used in laser equipment and in other industrial applications is waxed in laboratories, finally taking on an aspect similar to a polished hub, bar, disc or any others.

Normally this glass must be handled later to carry out the characterisation and the different tests it is submitted to.

Currently this handling is done by picking up the glass with some clamps and keeping it after each test in a container.

The continuous handling of the glass causes scratches and marks to appear on it, with the subsequent deterioration.

This handling becomes considerably more complicated when the glass has to be cleaned with solvents, electrical voltage has to be applied to it or it is submitted to a change in temperature.

US Patent n° 5291092 discloses a hid vehicle headlamp capsule assembly. This document describes an arc discharge headlamp capsule comprising a device for securing the arc tube (which is made of quartz glass) comprising a retainer with an inner truncated cone-shaped surface furthermore a wedge with an outer truncated cone shaped surface that acts upon the inner surface of the retainer and an inner surface designed to be conformal with the surface of the rear end of the arc tube. The tube is fastened in a permanent way. Consequently, this document does not propose a non permanent fastening of the tube because this type of fasteming is not designed to be dismantled.This document does not concern the optical glasses including optical crystals and is limited to the technological field of lamp production. Moreover, the device described in this document is designed to fasten parts which are cylindrical and cannot be adapted to other parts.

### DESCRIPTION OF THE INVENTION

The device to fasten the optical glass targeted by this invention has a series of constructive peculiarities that enable the glass to be immobilised just by pressure and without having to use adhesive, making it possible to handle the glass right from the start, after having cut, lapped or polished it.

According to the invention, this device is comprised of an outer ring provided with a truncated cone-shaped inner surface, by at least two wedges provided with an inner surface designed to exercise pressure on the glass to be immobilised and an outer truncated cone-shaped surface, which is applied to the truncated cone-shaped surface of the outer ring, so that depending on whether the wedges are inserted more or less into the outer ring, the pressure exercised on the glass positioned between them can be varied. Optionally, the device can include an additional ring designed to be positioned between the outer ring and the wedges increasing the range of glass sizes that the device accepts.

This device permits handling the glass without having to clasp it with clamps or other elements that might deteriorate its polished surface; in addition, it permits cleaning the glass with strong solvents as the device just secures it by pressure and without using adhesives or other fastening products that might be attacked by these solvents.

This device may be, therefore, used as a glass support, both during its handling and during the storage and transport periods.

In accordance with the invention, the outer ring may have a transverse cut to enable its diameter to be increased by means of elastic deformation or, it may have alternate cuts on the opposite sides to also permit increasing its diameter by means of elastic deformation.

As this glass has characteristics, which must be taken into account when used, it has been foreseen for the outer ring to have a specific area to note down the characteristics of the glass mounted on the device.

This outside ring will be preferably made of an electrically insulating material, so that it can be clasped even when an electrical voltage is being applied to the glass, and thermally conductive to facilitate the cooling of the glass by conduction.

In accordance with the invention, the inner surface of the wedges may be flat or polygonal to enable them to be adapted to the outer surface of the glass to be secured. These wedges may be made of an electrically and thermally conductive material, which would permit their use as electrical contacts in those cases where an electrical voltage must be applied to the glass positioned between them.

It has been foreseen for the additional ring mentioned above and designed to be positioned between the outer ring and the wedges to have a transverse cut to permit its adjustment on the inside of the outer ring.

### DESCRIPTION OF THE FIGURES.

To complement the description that is being made and in order to facilitate the understanding of the characteristics of the invention, a set of drawings is enclosed with this descriptive report where, with an illustrative but not limiting nature, the following has been illustrated:
- Figure 1 shows a perspective view of an execution example of the device to secure optical glass, where the outer ring, an additional ring and the two wedges used to secure the glass can be seen.
- Figure 2 shows a vertical section profile view during the mounting of a glass onto the device.
- Figure 3 shows a similar view to the previous one where the glass mounted on the device can be seen.
- Figure 4 shows a front view of the outer ring where the area foreseen for printing the characteristics of the glass can be seen.
- Figure 5 shows an execution variant of the outer ring, foreseen with alternate cuts on the opposite ends.

### PREFERENTIAL EXECUTION.

As can be seen in the referenced figures, this device is comprised of an outer ring (1) whose inner surface (11) is truncated cone-shaped and of at least two wedges (2) designed to be housed more or less on the inside of the ring (1) causing the immobilisation of the optical glass (3) positioned between them, by pressure.

To achieve this immobilisation it has been foreseen for the wedges (2) to be truncated cone-shaped on the outer surface (21) and for the inner surface (22) to be suitably configured to act upon the glass (3) to be immobilised.

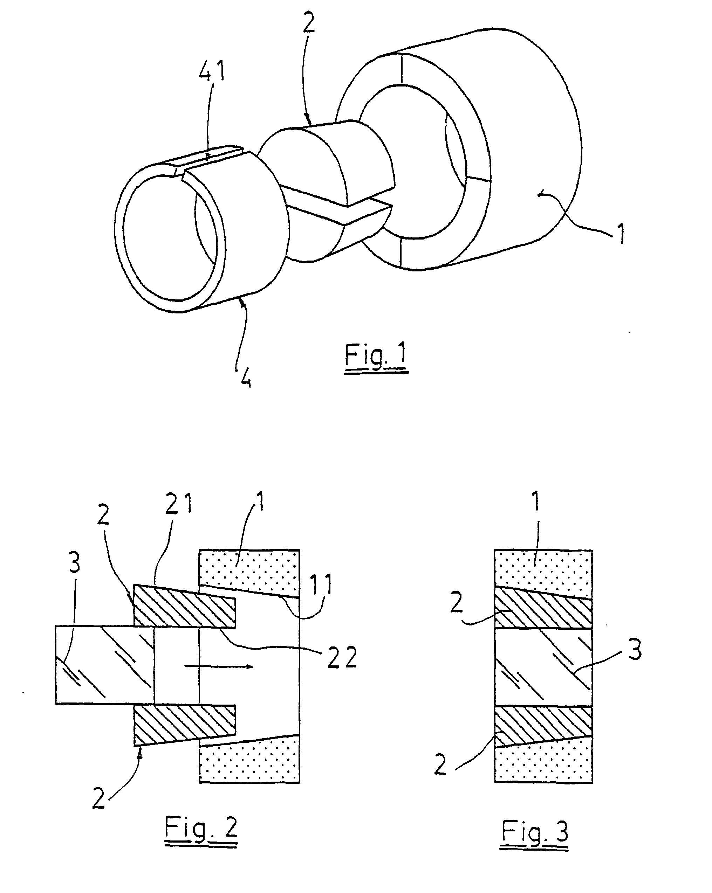

Insofar as the wedges (2) are inserted in the outer ring (1) the pressure they exercise on the glass (3) increases due to the conical shape of the surfaces (11 and 21).
The inner surface (22) of the wedges illustrated in figures 1, 2 and 3 are flat although they could also be polygonal depending on the outer shape of the glass (3) to be immobilised.

As shown in the execution example of figure 1, the device can include an additional ring (4) designed to be positioned on the inner surface (11) of the body (1) increasing the range of glass sizes that can be secured by the device.

The additional ring (4), illustrated in figure 1, has a transverse cut (41) which permits its elastic opening, thus facilitating its assembly between the wedges (2) and the outer ring (1).

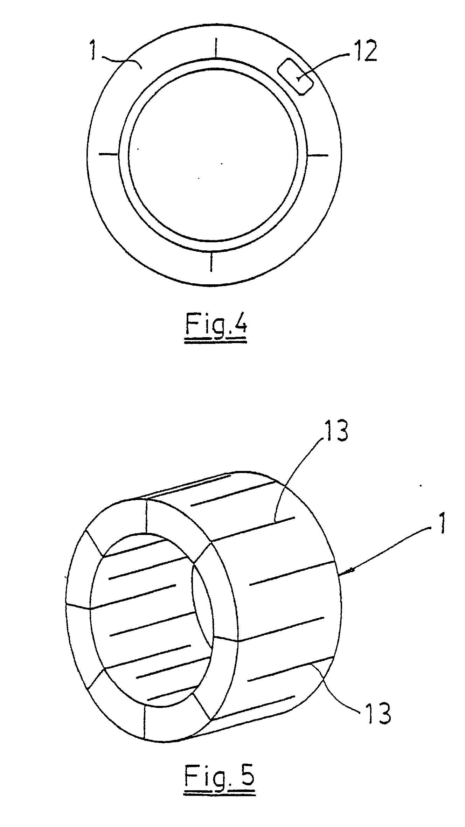

In the execution example shown in figure 4, a specific area (12) defined in the body (1) can be observed to note down the characteristics of the glass (3) mounted on the device.

In the execution example shown in figure 5, the outer ring (1) has some alternate cuts (13) on the opposite ends, which facilitate its elastic extension like an accordion, permitting it, on the one hand, to increase its diameter and on the other to act as a spring, exercising pressure against the outer surface of the wedges (2).

Once the nature of the invention has been sufficiently described, as well as an example of preferential execution, for the appropriate purpose, it is noted that the materials, shape, size and placement of the elements described can be modified, providing this does not represent any alteration of the essential characteristics of the invention that are claimed below..

## Claims

1. Device to secure optical glass of the type of which designed to be used in laser equipment, **characterised in that** it includes: an outer ring (1) provided with an inner truncated cone-shaped surface (11), at least two wedges (2) provided with an inner surface (22) designed to exercise pressure on the glass (3) to be positioned between then the inner surface of the wedges being flat or polygonal, and an outer truncated cone shaped surface (21) that acts upon the truncated cone-shaped surface (11) of the outer ring (1), and, optionally, an additional ring (4) designed to be positioned between the outer ring (1) and the wedges (2), increasing the range of glass sizes (3) that the device can accept.

2. Device, according to the previous claim, **characterised in that** the outer ring (1) comprises a transverse cut to permit an increase in its diameter by means of elastic deformation.

3. Device, according to claim 1, **characterised in that** the outer ring (1) comprises alternating cuts (13) on the opposite end sides to be able to increase its diameter by elastic deformation.

4. Device, according to any of the above claims, **characterised in that** the outer ring (1) is made of an electrically insulating and thermally conductive material to facilitate the cooling of the glass by conduction.

5. Device, according to claim 1, **characterised in that** the wedges (2) are made of both an electrically and thermally conductive material to permit their use as electrical contacts in those cases where an electrical voltage must be applied to the glass positioned between them and to facilitate the cooling of the glass by conduction.

6. Device, according to claim 1, **characterised in that** the additional ring (4) has a transverse cut (41) designed to permit its adjustment on the inside of the outer ring (1).

## Patentansprüche

1. Vorrichtung zur Befestigung einer Linse der Art, die zur Benutzung in einem Lasergerät bestimmt sind, **dadurch gekennzeichnet, dass** sie aus folgenden Teilen besteht: einem äußeren Ring (1) mit einer inneren Oberfläche in Form eines abgeschrägten Konus (11), mindestens zwei Keilen (2) mit einer inneren Oberfläche (22), die dazu bestimmt ist, einen Druck auf das Glas (3) auszuüben, das zwischen ihnen eingesetzt werden soll, wobei die innere Oberfläche der Keile flach oder polygonal ist und die äußere Oberfläche die Form eines abgeschrägten Konus (21) besitzt, welcher auf die Oberfläche in Form eines abgeschrägten Konus (11) des äußeren Ringes (1) wirkt, und, wahlweise, einem zusätzlichen Ring (4), der dazu bestimmt ist, zwischen dem äußeren Ring (1) und den Keilen (2) eingesetzt zu werden, um die Größenspanne der Linsen (3) zu erweitern, welche in die Vorrichtung eingesetzt werden können.

2. Vorrichtung nach obigem Anspruch, **dadurch gekennzeichnet, dass** der äußere Ring (1) einen quer verlaufenden Einschnitt besitzt, welcher durch elastische Verformung eine Vergrößerung seines Durchmessers ermöglicht.

3. Vorrichtung nach Anspruch 1, **dadurch gekennzeichnet, dass** der äußere Ring (1) auf den Seiten der entgegengesetzten Enden wechselseitig angebrachte Einschnitte (13) besitzt, um seinen Durchmesser durch elastische Verformung vergrößern zu können.

4. Vorrichtung nach einem der obigen Ansprüche, **dadurch gekennzeichnet, dass** der äußere Ring (1) aus einem elektrisch isolierenden und wärmeleitenden Stoff besteht, um ein Abkühlen der Linse durch Konduktion zu vereinfachen.

5. Vorrichtung nach Anspruch 1, **dadurch gekennzeichnet, dass** die Keile (2) aus einem strom- und wärmeleitenden Stoff bestehen, um ihre Benutzung als Stromkontakte zu ermöglichen, wenn auf die zwischen ihnen eingesetzte Linse eine elektrische Spannung angewandt werden soll, um das Abkühlen der Linse durch Konduktion zu vereinfachen.

6. Vorrichtung nach Anspruch 1, **dadurch gekennzeichnet, dass** der zusätzliche Ring (4) einen quer verlaufenden Einschnitt (41) besitzt, der dazu bestimmt ist, seine Anpassung auf das Innere des äußeren Rings (1) zu erlauben.

## Revendications

1. Dispositif pour fixer un verre optique du type qui est conçu pour être utilisé dans un équipement laser, **caractérisé en ce qu'**il comprend : un anneau extérieur (1) comportant une surface intérieure en forme de cône tronqué (11), au moins deux coins (2) comportant une surface intérieure (22) conçue pour exercer une pression sur le verre (3) devant être positionné entre eux, la surface intérieure des coins étant plate ou polygonale, et une surface extérieure en forme de cône tronqué (21) qui agit sur la surface en forme de cône tronqué (11) de l'anneau extérieur (1), et, facultativement, un anneau supplémentaire (4) conçu pour être positionné entre l'anneau extérieur (1) et les coins (2), augmentant la plage des tailles de verre (3) que le dispositif peut accepter.

2. Dispositif selon la revendication précédente, **caractérisé en ce que** l'anneau extérieur (1) comprend une découpe transversale pour permettre une augmentation de son diamètre au moyen d'une déformation élastique.

3. Dispositif selon la revendication 1, **caractérisé en ce que** l'anneau extérieur (1) comprend des découpes alternées (13) sur les côtés des extrémités opposés pour pouvoir augmenter son diamètre par déformation élastique.

4. Dispositif selon l'une quelconque des revendications ci-dessus, **caractérisé en ce que** l'anneau extérieur (1) est fait d'un matériau électriquement isolant et conducteur de chaleur pour faciliter le refroidissement du verre par conduction.

5. Dispositif selon la revendication 1, **caractérisé en ce que** les coins (2) sont faits d'un matériau à la fois conducteur de chaleur et d'électricité pour permettre leur utilisation comme contacts électriques dans ces cas où une tension électrique doit être appliquée au verre positionné entre eux et pour faciliter le refroidissement du verre par conduction.

6. Dispositif selon la revendication 1, **caractérisé en ce que** l'anneau supplémentaire (4) comporte une découpe transversale (41) conçue pour permettre son ajustement sur l'intérieur de l'anneau extérieur (1).
